# EUROPEAN PATENT APPLICATION

(11) **EP 4 224 880 A1**
(43) Date of publication of application: **09.08.2023**
(21) Application number: 22155111.2
(22) Date of filing: 04.02.2022
(51) Int. Cl.: H04Q 9/00, G01T 1/00

(54) **SENSOR DATA PROCESSING MODULE AND METHOD THEREOF**

(71) Applicant: Universität Heidelberg, 69117 Heidelberg (DE)
(72) Inventor: FISCHER, Peter, 68775 Ketsch (DE); RITZERT, Michael, 68804 Altlußheim (DE)
(74) Representative: Müller-Boré & Partner Patentanwälte PartG mbB

(57) **Abstract**

The application relates to a sensor data processing module 1 including a plurality of integrated circuit devices 10 each configured to receive and process sensor data, in particular sensor data from a PET scanner 100, the integrated circuit devices 10 each comprising: at least one data input 12 for receiving measurement data from at least one sensor 90; at least one data input 12 for receiving a plurality of sensor events from at least one other integrated circuit device 10, wherein each sensor event comprises at least a time information and an event information; and at least one data output 14 for sending one or more sensor events; wherein the integrated circuit devices 10 are each configured: to create one or more sensor events from the measurement data, wherein each sensor event comprises at least a time information and an event information; and to process the sensor events by sorting the sensor events at least based on the time information; and wherein at least two of the plurality of integrated circuit devices 10 are connected such that the data output 14 of one integrated circuit device 10 is connected to the data input 12 of at least one other integrated circuit device 10.

## Description

The present disclosure relates to a PET scanner system, a sensor data processing module, in particular for a PET scanner, and a method for receiving and processing sensor data, in particular sensor data from a PET scanner.

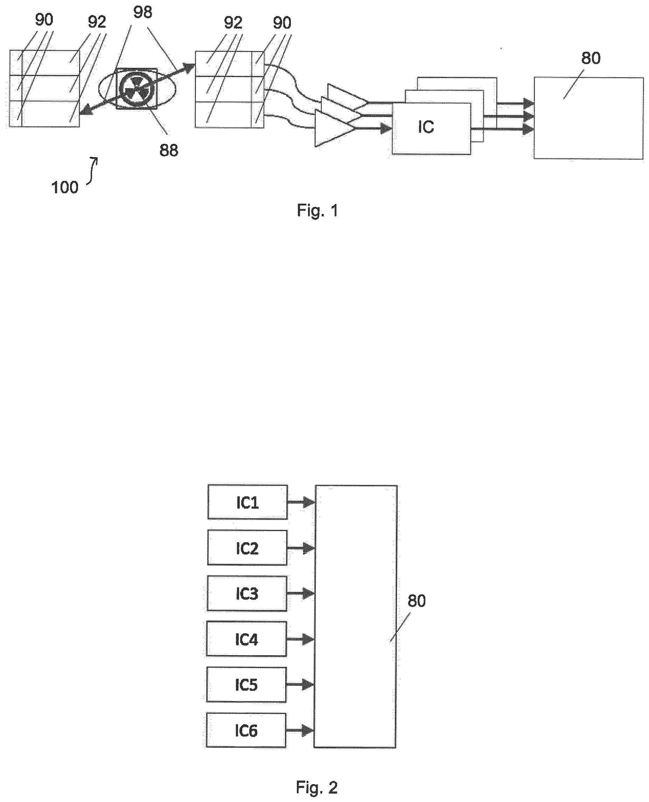

Systems used for gathering and/or processing a high amount of sensor data generally require high processing power in order to handle the sensor data in reasonable time. In particular, if a single computer is provided for collecting all sensor data in order to further process and/or analyze the sensor data, said computer requires particularly high processing power. An exemplary system is a system for receiving and/or processing sensor data from a positron emission tomography (PET) scanner, which usually comprises many sensors generating high amounts of sensor data. In PET scanners, gamma radiation is detected, more specifically gamma quanta (or particles) emitted from the annihilation of positrons. In fact, two gamma quanta are emitted from each positron annihilation, wherein the two gamma quanta travel in substantially opposing directions away from one another. A PET scanner attempts to detect both gamma quanta originating from a single positron annihilation event by comprising sensors being arranged in a cylinder shell. Furthermore, since each gamma quantum is detected independently, the generated sensor data needs to be analyzed in order to identify gamma quanta which are related to each other. For this, e.g. the time of detection is relevant and compared. However, as e.g. shown in Figs. 1 and 2, providing a computer collecting all of the sensor data involves high processing power and increased processing time required, in particular if a high amount of gamma quanta are detected and/or a large number of sensors are provided. Such systems are expensive and have a high energy consumption.

It is therefore an object of the present invention to provide a sensor data processing module for receiving and processing sensor data more efficiently. It is a particular object of the present invention to provide a sensor data processing module which gathers and processes sensor data, in particular by time sorting sensor data, in order to reduce processing effort.

This is achieved by the subject-matters disclosed in the independent claims. Additional embodiments are disclosed in the dependent claims

### Summary of the Invention

One aspect of the present invention relates to a sensor data processing module including a plurality of integrated circuit devices each configured to receive and process sensor data, in particular sensor data from a positron emission tomography (PET) scanner, the integrated circuit devices each comprising: at least one data input for receiving measurement data from at least one sensor; at least one data input for receiving a plurality of sensor events from at least one other integrated circuit device, and at least one data output for sending one or more sensor events; wherein each sensor event comprises at least a time information and an event information; wherein the integrated circuit devices are each configured: to create one or more sensor events from the measurement data, wherein each sensor event comprises at least a time information and an event information; and to process the sensor events by sorting the sensor events at least based on the time information; and wherein at least two of the plurality of integrated circuit devices are connected such that the data output of one integrated circuit device is connected to the data input of at least one other integrated circuit device.

In a respective sensor data processing module, each integrated circuit device is configured to receive measurement data from at least one sensor and to identify and/or create and/or generate one or more sensor events from said measurement data. The measurement data may include and/or be data created and/or provided by one or more sensors, e.g. an analogous or digital signal and/or a value based on a measurement signal generated by one or more sensors. The measurement data may be modified, e.g. amplified and/or filtered, either by the integrated circuit device or before being received by the integrated circuit device, e.g. by respective circuitry. Each sensor event corresponds and/or relates to a gamma quantum detected by the at least one sensor. In order to create a sensor event, each integrated circuit device is configured to analyze the measurement information and detect and/or identify and/or extract at least an event information and assign and/or allocate a time information. The event information may comprise and/or be a value characterizing the detected gamma quantum, e.g. a voltage and/or current value of an amplitude of a sensor signal and/or a digital sensor signal. The time information may correspond to a time stamp and/or comprise a value characterizing the time the sensor event has occurred and/or has been detected and/or created.

In addition, each integrated circuit device is configured to receive a plurality of sensor events from one or more other integrated circuit devices, wherein said sensor events are preferably sorted based on at least the time information of said sensor events. The sensor events received by the integrated circuit device are processed by being sorted, e.g. at least based on the time information of the sensor events. Each integrated circuit device is preferably further configured to send a plurality of sorted sensor events to one or more other integrated circuit devices and/or to a processor and/or a computer.

A further aspect relates to a sensor data processing module including a plurality of integrated circuit devices each configured to receive and process sensor data, in particular sensor data from a positron emission tomography (PET) scanner, the integrated circuit devices each comprising: a plurality of data inputs for receiving a plurality of sensor events from at least one sensor and/or from at least one other integrated circuit device, wherein each sensor event comprises at least a time information and an event information; and at least one data output for sending one or more sensor events; wherein the integrated circuit devices are each configured to process the plurality of sensor events by sorting the sensor events at least based on the time information; and wherein at least two of the plurality of integrated circuit devices are connected such that the data output of one integrated circuit device is connected to the data input of at least one other integrated circuit device. Optionally, the sensor event processing module further comprises one or more sensor event creation devices for creating sensor events from measurement data of one or more sensors.

In a respective sensor data processing module, each integrated circuit is configured to receive a plurality of sensor events and provides them to one or more other integrated circuit devices of the sensor data processing module and/or an (external) processor and/or computer in a particular order, e.g. based on at least their time information. The plurality of sensor events may be received either from one or more sensors, from one or more other integrated circuit devices or from one or more sensors and one or more other integrated circuit devices. The sensor events at least comprise time information indicating the time of reception and/or creation of a respective sensor event as well as event information, e.g. a voltage value and/or other value indicating a measured signal corresponding to the respective sensor event. At least some of the sensor events received by the integrated circuit device are processed, e.g. by being sorted at least based on their time information. In addition, at least some of the sensor events may be deleted and/or discarded as described more detail below.

Preferably, the plurality of integrated circuit devices are identical. This is particularly advantageous in order to reduce development and manufacturing costs and/or design work for circuit boards for example. Alternatively, only a part of the plurality of integrated circuit devices of a sensor data processing module may be identical and one or more other parts of the plurality of integrated circuit devices may be different, e.g. comprising a different number and/or type of data inputs. This way, integrated circuit devices may be chosen depending on their intended function and/or placement with respect to other integrated circuit devices. Alternatively and/or in addition, certain functions and/or inputs and/or outputs of one or more specific integrated circuit devices may be activated or deactivated, particularly in order to reduce power consumption and/or to improve performance of the integrated circuit device(s)

Preferably, the plurality of integrated circuit devices are connected in a serial and/or cascading manner. In particular, connecting an output of a first integrated circuit device to a data input of a second integrated circuit device allows said downstream second integrated circuit device to sort the sensor events processed by said upstream first integrated circuit device. In a serial arrangement, an integrated circuit device is connected to one other upstream integrated circuit device and may receive data from said one upstream integrated circuit device and no other integrated circuit device(s). Alternatively and/or in addition, in a serial arrangement, an integrated circuit device may be connected to one other downstream integrated circuit device and may send data to said one downstream integrated circuit device and no other integrated circuit device(s). In a cascading arrangement, an integrated circuit device may be connected to one or more other integrated circuit devices and may receive data from said one or more other upstream integrated circuit devices and/or send data to one or more other downstream integrated circuit devices.

Optionally, a downstream integrated circuit device may additionally receive one or more sensor events at one or more data inputs from one or more sensors, which may further be included in the sorting process. This way, a large number of sensor events from the same or different sensors may be sorted and sent to one or more downstream integrated circuit devices and/or a different devices, e.g. a processor or a computer. Alternatively and/or in addition, at least one of the plurality of integrated circuit devices may be connected to one or more other downstream integrated circuit devices by a plurality of data outputs, which in particular allows for connection redundancy and/or increased data transmission and/or enhanced processing efficiency.

If a plurality of data outputs are used for sending sensor events, the schedule for sending the sensor events and/or processing the received sensor events may use a round-robin decision algorithm. As an example, if two or more sensor events possess equal time information, a round-robin decision algorithm may be used for deciding on how to sort said sensor events. As a further example, if sensor events are sent to one or more downstream integrated circuit devices through two or more data outputs, a round-robin decision algorithm may decide which sensor event is sent through which data output. Any other suitable decision algorithm may be used instead and/or in addition to the round robin decision algorithm of the above examples.

Each sensor event may further include one or more of: at least one status flag; and/or a sensor ID; and/or a sensor channel ID; and/or an integrated circuit device ID. A status flag may indicate an error condition such as an ADC overflow and/or information regarding the creation and/or reception of a sensor event. A sensor ID may comprise a unique identification code of a sensor so that the respective sensor event may be allocated and/or assigned to a specific sensor, e.g. to a sensor of a PET scanner. As an alternative or in addition to the sensor ID, path information indicating a path a particular sensor event has taken through the plurality of connected integrated circuit devices may be included in each sensor event. Said path information may be altered during traveling of the sensor event through the plurality of integrated circuit devices. For example, it may include information corresponding to an identifier and/or a number of each input the sensor event is being received by an integrated circuit device and/or output the sensor event is being sent by an integrated circuit device, thereby providing a distinct path information for each sensor event. As particular example, a number series of "1131" may indicate that a sensor event has been received by a first integrated circuit device through data input 1, has been sent through data output 1 of said first integrated circuit device, has been received by a second integrated circuit device through data input 3 and has been sent through data output 1 of said second integrated circuit device.

A sensor ID and/or a path information may be particularly used for analyzing if two sensor events of a PET scanner may be related to each other, i.e. correspond to gamma quanta originated from the same positron annihilation event. E.g. if the two respective sensor events originate from sensors being arranged at an angle of approximately 180° and having time information being substantially similar, e.g. having a time difference lower than e.g. about 20 ns, preferably lower than about 10 ns, said sensor events may be identified as related and/or paired. Similarly, if sensor events with time information being substantially similar but being detected by neighboring sensors, it is likely that said sensor events are not related. Thus, said sensor events may be deleted and/or discarded and/or disregarded.

Optionally, one or more sensors may comprise a plurality of sensor channels for sending measurement data and/or sensor events. If a sensor has a plurality of sensor channels, it is advantageous if the sensor event further includes a sensor channel ID so that each sensor event may be allocated and/or assigned to a specific channel of a sensor. This is particularly advantageous if different sensor channels of a sensor are connected to different integrated circuit devices.

Each sensor event may be regarded as data package sent from a sensor and/or being processed by an integrated circuit device. Sensor events may further include an integrated circuit device ID indicating which integrated circuit device has created a respective sensor event. Said information and/or sensor ID and/or path information as described above may be particularly used for analyzing an efficiency of the sensor data processing module and/or for debugging.

Advantageously, each integrated circuit device comprises one or more data storages and/or buffers for at least temporarily storing sensor data and/or sensor events. A data storage and/or buffer may prevent or at least reduce loss of sensor events due to timing and/or processing speed differences of functional components and/or blocks of the sensor(s) and/or the integrated circuit device(s). Also, bandwidth of a connection between integrated circuit devices may be limited so that sending of sensor events may be delayed. Also, data storages may compensate and/or buffer fluctuations of the rate of incoming sensor events.

A FIFO (first in first out) buffer is a particular preferred data storage as it provides a queue of sensor events in the order of the time of reception. A functional block and/or a logic block and/or a logic circuit subsequent to the data storage may access the queued sensor events as soon as the block and/or circuit is ready and/or other data is provided and/or certain predefined conditions are met. Most preferably, each integrated circuit device comprises a respective data storage for each data input and/or before each functional block and/or logic block and/or logic circuit.

Optionally, a data storage may be provided at the data output for temporarily queuing the processed sensor events before sending to a downstream integrated circuit device and/or another device such as an external processor or computer.

Preferably, each integrated circuit device further comprises at least one clock input for receiving a clock and/or timer signal. A clock (specifically a global clock) signal and/or timer signal applied to the plurality of integrated circuit devices allows an essentially synchronous working of the plurality of integrated circuit devices. In this way, receiving, processing and/or sending of the sensor data and/or sensor events may occur more reliably, faster and/or in an expectable manner. In particular, a first clock input may be provided for receiving a periodically oscillating clock signal and a second clock input may be provided for receiving a timer signal such as a start and/or reset signal.

A clock input may further be used for a synchronized reset and/or activation and/or deactivation of the plurality of integrated circuit devices and/or further devices of the sensor data processing module such as amplifier(s) for modifying measurement data. Also, a clock input may be used for assigning a time information to a sensor event created by an integrated circuit device or a sensor. For example, a sensor event creation block of an integrated circuit device may use a clock signal received by a clock input for assigning a time information to a sensor event. A respective sensor event creation block may receive a shared and/or common reset signal in order to be in synchrony with other sensor event creation blocks, in particular of other integrated circuit devices.

Further preferred is that each integrated circuit device comprises a control input for receiving at least one control signal. Possible control features to be controlled by the at least one control signal include activation and/or deactivation of one or more data inputs and/or data outputs, starting and/or stopping processing of sensor data and/or configuration of one or more functions of the integrated circuit device(s).

A control input and/or control signal may include JTAG, 12C, SPI, USB or another suitable code and/or interface and/or protocol. By using a code and/or interface and/or protocol allowing use of a common and/or shared control signal, all integrated circuit devices may be controlled simultaneously and/or one or more specific integrated circuit devices may be controlled individually by including respective identification IDs addressing one or more integrated circuit devices. Also, a timing signal may be transmitted using the control signal, e.g. by clock data recovery (CDR) in the integrated circuit devices. This may be used as alternative or in addition to a signal received by a clock input, e.g. for a synchronized working of a plurality of integrated circuit devices.

Advantageously, each integrated circuit device is configured to disable one or more data inputs and/or one or more data outputs and/or one or more functional blocks of the integrated circuit device(s). For example, this may be achieved by using a corresponding control signal applied to the control input of the integrated circuit device(s). This in particular allows for reduced power consumption and/or for assigning a specified functionality to the integrated circuit device(s).

Most preferably, at least one integrated circuit device of the plurality of integrated circuit devices is configured to create one or more timeout events, e.g. if no sensor event has been received and/or created and/or processed within a specified (predetermined or predeterminable) time period and, optionally, send or output the timeout event. This advantageously may prevent or at least reduce a data jam and/or delay of processing and/or sending sensor events, in particular if a functional block and/or logic block requires at least two sensor events and only one or none is present. In this case, the functional block and/or logic block would not forward any sensor events, which may cause a delay of one or more subsequent functional blocks and/or logic blocks of the same and/or of subsequent integrated circuit devices. Therefore, a timeout event may be created and forwarded and/or sent to a functional block and/or logic block and/or a downstream integrated circuit device.

Preferably, the timeout event has the same configuration (e.g. has the same size and/or length and/or comprises the same structure) as a sensor event. However, instead of comprising an event information relating to a detected gamma quantum at a sensor, the timeout event preferably includes data and/or a flag, which indicates that no sensor events have been created and/or received and/or processed for the specified time period. Preferably, each timeout event includes a time information, preferably being at least in part identical to a time information of a sensor event so that the time information of a timeout event may be processed the same way as time information of a sensor event. This way, a functional block and/or logic block and/or an integrated circuit device knows that it may not expect a sensor event to follow the timeout event, which has a time information below the time information of the timeout event. Accordingly, it may process and/or send all sensor events with a time information below the time information of the timeout event. In other words, a timeout event may be processed by one or more integrated circuit devices the same way as a sensor event, in particular by sorting, sending and/or receiving the timeout events identically to a sensor event. Specifically, a timeout event may be sent to a downstream integrated circuit device using the same output and may be received from an upstream integrated circuit device using the same input as used for sending and receiving a sensor event, respectively.

A functional block and/or logic block and/or integrated circuit device receiving a timeout event may identify the timeout event and may start and/or continue processing other sensor events received and/or queuing at other inputs.

Also, if the timeout event is in line for processing due to the time information, the functional block and/or logic block and/or integrated circuit device may either process the timeout event or it may erase the timeout event.

Subsequently, sensor event(s) or other timeout event(s) being present in the queue behind the processed and/or deleted timeout event are then considered for processing. The described timeout feature of an integrated circuit device advantageously improves processing efficiency and reliability because it e.g. prevents that data storage for queuing sensor events at one input of a functional block and/or logic block and/or an integrated circuit device overflows while waiting for one or more sensor events to arrive at another input.

Preferably, a rate and/or a reference time period for creating and/or sending a timeout event may be selected, preferably by consideration of processing speed and/or connection scheme of integrated circuit devices and/or sensor rate and/or expected rate of detected gamma quanta.

Optionally, a timeout event may include status information and/or other information regarding the sensor data processing module and/or one or more sensors and/or one or more integrated circuit devices. In this case, it is preferred that the timeout events are processed and forwarded/sent, e.g. to a processor storing and/or analyzing the information in the timeout events. Such information may include one or more of: temperature of an integrated circuit device, a sensor event count, time information, measurement information quantity and/or quality, integrated circuit device ID, sensor ID and/or sensor channel ID. Alternatively and/or in addition, a timeout event may include an indication with respect to an overflow of a data storage and/or an ADC and/or a timeout event count.

Advantageously, each integrated circuit device is configured to encode the processed sensor events before sending and/or decode sensor events received from another integrated circuit device or a sensor. Particularly suitable is 8b/10b, 16b/18b or64b/66b encoding. By choosing a suitable encoding for the sensor event transmission, an AC coupling is possible so that voltage differences between different parts of the sensor data processing module may be compensated for.

Optionally, each integrated circuit device configured to receive measurement data from one or more sensors may modify the time information to be assigned to one or more sensor events in order to obtain a timing offset compensation and/or account for signal delay.

In particular, at least some of the data inputs for receiving measurement data from a sensor may comprise a time offset compensation, wherein the time information of each sensor event is modified, i.e. increased or decreased by a specified period. Preferably, said specified period is measured by a calibration of one or more sensors and/or integrated circuit devices.

A respective calibration may include a trigger event at a specified timing, from which a plurality of sensor events are created and processed. The time information of said sensor events may be compared in order to detect timing delays and/or a timing offset and to determine an appropriate compensation. Advantageously, a respective timing offset compensation is performed at creation of the sensor event. Alternatively, the time information of a sensor event may be modified after creation, but preferably before the sensor event is processed by ordering the sensor events.

In order to obtain an improved sorting of the sensor events based on their time information, it is advantageous to compensate for timing offset e.g. only by addition of a period of time to the time information and/or by increasing the time information. This way, the sorting logic will not receive a sensor event having a time information lower than a timer received and/or obtained from a clock and/or timing signal. Also, an improved quality of the time information of the sensor events is obtained for an improved reconstruction quality.

Optionally, at least some of the plurality of integrated circuit devices may comprise at least one sensor, in particular an optical sensor, for providing measurement data for creating sensor events by the integrated circuit device. By integrating a sensor in one or more of the plurality of integrated circuit devices, the number of parts and/or connection means in a system, such as a PET scanner system, may be reduced. Also, time delay of measurement data may be reduced and/or processing efficiency may be increased.

The sensor data processing module may further comprise at least one data processor for receiving and/or processing sensor events from all of the plurality of integrated circuit devices of the sensor data processing module. Preferably, said data processor, which may be or comprise an FPGA, microcontroller and/or computer, may be positioned in relation to the plurality of integrated circuit devices so that it receives at least part or all of the sensor events which has been received, processed and/or sent by any one of the plurality of integrated circuit devices. Said data processor may be particularly provided for gathering and sorting the sensor events generated by a PET scanner at last instance after the plurality of integrated circuit devices.

At least some of the integrated circuit devices may further be configured to send information regarding a status, a configuration, a temperature, and/or other data regarding the integrated circuit device. This data particularly may be sent the same way as the sensor events and/or using a separate data output.

The sensor data processing module may further be configured to create and/or send and/or process test data having a known timing and/or rate. By analyzing the processing time and/or the outcoming data, a processing efficiency and/or loss may be quantified, which may be used for statistical considerations and/or inspection of the sensor data processing module.

Another aspect of the application relates to a positron emission tomography (PET) scanner system comprising: a plurality of sensors, in particular optical sensors for detecting gamma quanta; and at least one sensor data processing module as described in the foregoing.

Another aspect relates to a method for receiving and processing sensor data, in particular sensor data of a positron emission tomography (PET) scanner, to be carried out by an integrated circuit device being part of a plurality of integrated circuit devices being arranged in series and/or in a cascaded manner (particularly of a sensor data processing module of the above aspect or a particular embodiment thereof), the method comprising: receiving measurement data from one or more sensors, in particular optical sensors of a PET scanner; receiving one or more sensor events from one or more upstream integrated circuit devices, each sensor event comprises at least a time information and an event information; creating one or more sensor events from the measurement data, each sensor event comprises at least a time information and an event information; processing the sensor events by sorting the sensor events at least based on the time information; and sending the processed sensor events.

In this aspect, the integrated circuit device carrying out the method is configured to receive measurement data from one or more sensors and create one or more sensor events based on said measurement data. Said sensor events are mixed and/or sorted together with the sensor events received by another integrated circuit device.

Creating sensor events from measurement information may include analyzing the measurement information and detecting and/or identifying and/or extracting at least an event information and assigning and/or allocating a time information.

The event information may comprise a value characterizing the detected gamma quantum, e.g. a voltage and/or current value of an amplitude of a sensor signal. The time information may comprise a value characterizing the time the sensor event has occurred and/or has been detected and/or created, e.g. a time stamp.

The measurement data may include data created and/or provided by one or more sensors, e.g. an analogous or digital signal and/or a value based on a measurement signal generated by one or more sensor elements of a sensor. The measurement data may be modified, e.g. amplified and/or filtered, either by the integrated circuit device or before being received by the integrated circuit device, e.g. by respective circuitry.

Each sensor event preferably corresponds and/or relates to a gamma quantum detected by the at least one sensor.

A further aspect relates to a method for receiving and processing sensor data, in particular sensor data of a PET scanner, to be carried out by an integrated circuit device being part of a plurality of integrated circuit devices being arranged in series and/or in a cascaded manner (particularly of a sensor data processing module of the above aspect or a particular embodiment thereof), the method comprising: receiving sensor events from one or more sensors, in particular optical sensors of a PET scanner, and from one or more upstream integrated circuit devices, each sensor event comprises at least a time information and an event information; processing the sensor events by sorting the sensor events at least based on the time information; and sending the processed sensor events.

Optionally, the method further comprises creating a timeout event if no sensor event has been received within a specified time period and sending the timeout event as outlined above.

Preferably, the method further includes encoding the sorted sensor events and/or decoding sensor events received from another integrated circuit device and/or a sensor. Particularly suitable is 8b/10b, 16b/18b or 64b/66b encoding. By choosing a suitable encoding for the sensor event transmission, an AC coupling is possible so that voltage differences between different parts of the sensor data processing module may be compensated for.

The present invention is further explained in detail by the following detailed description and the appended drawings, in which particular embodiments are illustrated by way of example, wherein the present invention is in no way limited by these particular embodiments. It should be understood that even though embodiments are separately described, single features thereof may be combined to additional embodiments.

### Brief description of the drawings

- Fig. 1: shows an exemplary positron emission tomography (PET) scanner system according to the prior art;
- Fig. 2: shows a sensor data processing module according to the prior art;
- Fig. 3: shows exemplary sensor data processing modules;
- Fig. 4: shows an exemplary arrangement of sensors of a positron emission tomography scanner;
- Fig. 5: shows a sensor data processing module with an exemplary integrated circuit device;
- Fig. 6: shows an exemplary sensor event processing block for processing sensor events;
- Fig. 7: shows an exemplary functional block for processing sensor events by selecting particular sensor events at least based on time information;
- Fig. 8: shows a further exemplary functional block for processing sensor events by selecting particular sensor events at least based on time information;
- Fig. 9: shows an exemplary timeout event generation block for generating a timeout event;
- Fig. 10: shows a flow diagram of methods for receiving and processing sensor data to be carried out by an integrated circuit device being part of a plurality of integrated circuit devices being arranged in series and/or in a cascading manner.

### Description of particular embodiments

**Fig. 1** shows an exemplary schematic of a positron emission tomography (PET) scanner system including a PET scanner 100 according to the prior art. The shown PET scanner 100 comprises a plurality of sensors 90 for detecting gamma radiation, more particularly gamma quanta emitted from radioactive annihilation of a positron as used in medical imaging. From the radiation source 88, e.g. a radioactive tracer isotope injected into human or animal body, positrons are emitted, which, when colliding with an electron within the human or animal body, two gamma quanta each having an energy of 511 keV are emitted in almost 180 degrees to each other as indicated by positron emission directions 98. The PET scanner 100 includes a plurality of sensors 90, preferably arranged in a circle and/or cylinder around the radiation source 88.

Optionally, each sensor 90 may comprise one or more scintillators and/or scintillator crystals 92, which exhibit scintillation such as a flash of light when being excited by ionizing radiation, forming a detection element. As an example, a scintillator may comprise and/or consist of lutetium oxyorthosilicate (LSO/Lu2SiO5), lutetium-yttrium oxyorthosilicate (LYSO), bismuth germanate (BGO) or another material suitable for detection of gamma quanta.

The sensors 90 are preferably optical sensors, e.g. photo sensors such as silicon photomultiplier/multi-pixel photon counter (SiPM/MMPC) or avalanche photodiode (APD) or other photo sensors suitable for detecting scintillation light occurring in a scintillator 92. Each sensor 90 may be coupled to one or more scintillators 92. In order to acquire an exact position of a detected gamma quantum, the plurality of sensors 90 are preferably of the size of few mm² and arranged next to each other.

Alternatively, a sensor 90 may comprise and/or consists of one or more semiconductor detectors such as cadmium telluride (CdTe) semiconductor detectors or one or more calorimeters.

Each sensor 90 is connected to one or more integrated circuits (IC), which receive one or more signals measured by the sensors 90 and evaluates and/or analyses the signals. Sensor signals may e.g. comprise and/or consist of a digital or analogue voltage signal. A sensor signal may be amplified and/or filtered and/or otherwise modified, either by an IC or before being received by an IC, e.g. by one or more amplification circuits.

An IC may identify a gamma quantum detected by a sensor and may allocate a measurement information such as a signal amplitude (peak or integral or the like) value and/or a time of the detection.

A system for processing and/or analyzing sensor data of a PET scanner usually includes a plurality of several hundreds or thousands of sensors 90 and/or channels of sensors. As shown in **Fig. 2****,** in the prior art, a plurality of ICs each receiving sensor data from one or more sensors are connected to a data processor 80, e.g. an FPGA or a computer, which collects all the detected gamma quanta and the respective information such as time of detection and signal amplitude. The data processor 80 particularly identifies gamma quanta, which have been detected at substantially the same time because said gamma quanta are considered as being caused by the same positron annihilation event. For this, the data relating to the detected gamma quanta may be sorted based on their time of detection by the data processor 80.

However, a system for analyzing and/or processing the high amount of sensor data as shown in Fig. 2 is inefficient, requires high calculation effort and/or resources and/or high energy consumption. Also, it is often difficult to implement a suitable connection of sensors, ICs and data processor(s) due to placement of said devices and/or routing of connection cables.

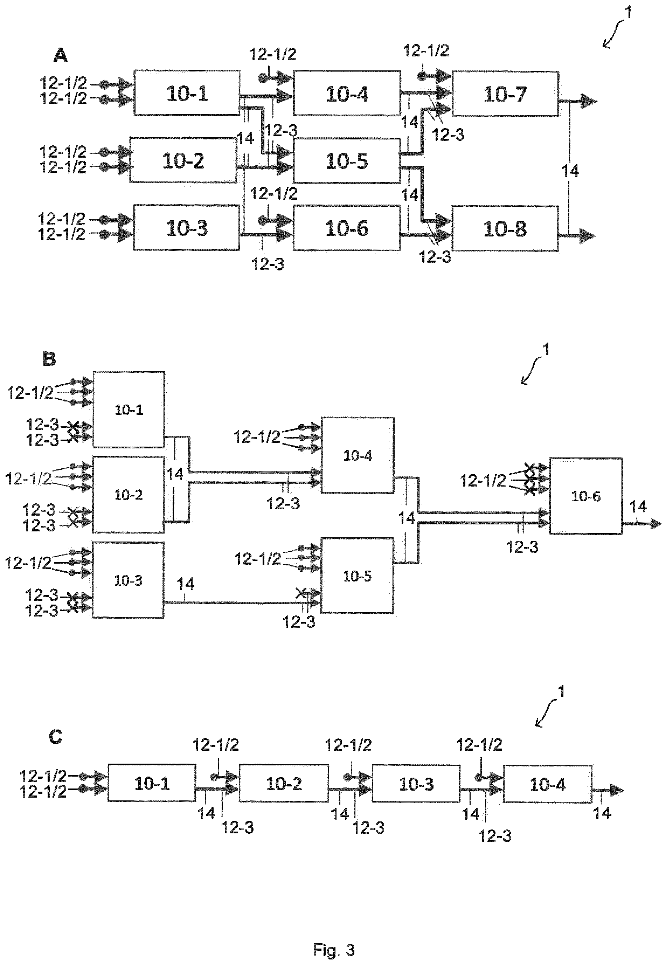

**Fig. 3** shows exemplary sensor data processing modules 1 which may be used in connection with a positron emission tomography (PET) scanner system including a PET scanner 100 as described in connection with Fig. 1. In particular, Fig. 3 shows a plurality of advantageously connected integrated circuit devices 10 for receiving and/or creating and/or processing sensor data, in particular sensor data of a PET scanner 100.

As shown in part A of Fig. 3, a plurality of, e.g. eight or more, integrated circuit devices 10 are arranged and/or connected to each other in a cascading manner, i.e. one integrated circuit device 10 is connected to one or more other upstream integrated circuit devices 10 and may receive data from said one or more other integrated circuit devices 10. At least some of the plurality of integrated circuit devices 10 are connected to one or more data outputs of one or more sensors 90 via at least one data input 12-1/2 (marked with a circle). In the illustrated example, integrated circuit devices 10-1, 10-2 and 10-3 each include a plurality of, e.g. two, data inputs 12-1 each connected to one or more sensors 90 so that integrated circuit devices 10-1, 10-2 and 10-3 each receive measurement data from two or more sensors 90.

Preferably, at least some of integrated circuit devices 10-1, 10-2 and 10-3 are configured to identify one or more gamma quanta detected by a respective sensor 90 and to create a sensor event for each gamma quantum.

A sensor event may include at least a time information indicating the time of detection of the gamma quantum and/or of creation of the sensor event and, preferably, an event information, such as e.g. a (peak or (charge) integral) value of a measurement signal.

Alternatively and/or in addition, at least some of integrated circuit devices 10-1, 10-2 and 10-3 may be configured to receive and process one or more sensor events received from one or more connected sensors 90 through one or more data inputs 12-2. The sensor events received from a sensor 90 may include a time information. If the sensor event does not include time information, a time information may be added to the sensor events after having been received by the respective integrated circuit device 10.

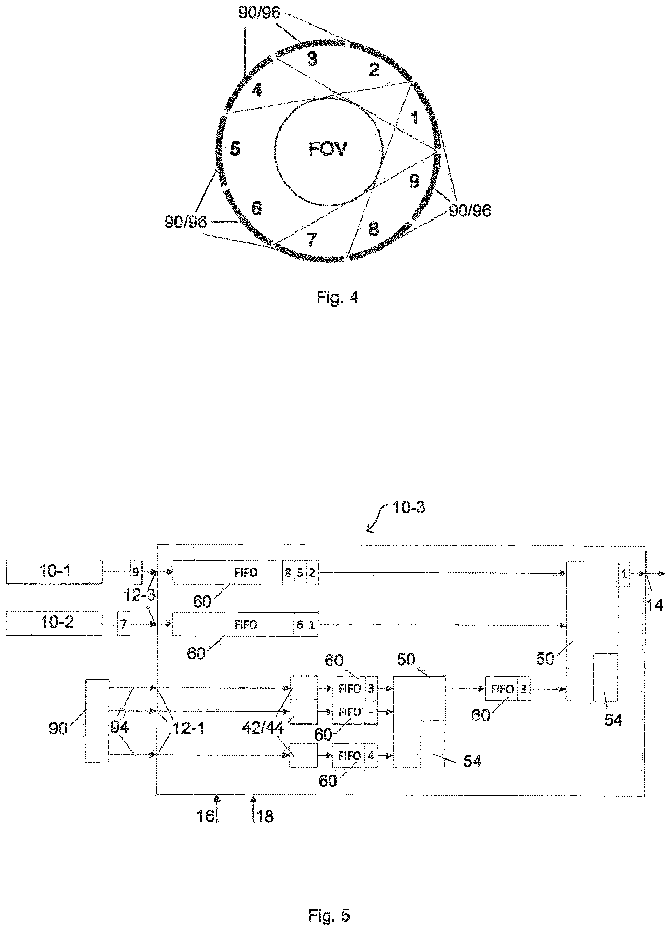

At least some of the plurality of integrated circuit devices 10-1 to 10-8, preferably all of the integrated circuit devices 10-1 to 10-8, are configured to process a plurality of sensor events by sorting the sensor events at least based on the time information. An exemplary sorting method is described in more detail below regarding Figs. 5 to 8.

As shown in part A of Fig. 3, at least some of the plurality of integrated circuit devices 10 may comprise a plurality of data inputs 12, which are connected to at least one sensor 90 (data inputs 12-1/2 marked with a circle) and another integrated circuit device 10 (data inputs 12-3), respectively. Specifically in the shown example, integrated circuit devices 10-4, 10-6 and 10-7 comprise one data input 12-1/2 each connected to a sensor 90 and one or more data inputs 12-3 connected to an upstream integrated circuit device 10-1, 10-3, 10-4 and 10-5, respectively. Thus, at least some of the plurality of integrated circuit devices 10 may process sensor events received from another integrated circuit device and a sensor (or sensor events created by data received from a sensor) and send the processed and/or sorted sensor events to one or more subsequent integrated circuit devices. This way, an advantageous and/or more efficient way of sorting the plurality of sensors events may be accomplished as at least partly pre-sorted sensor events are received by an analyzing data processor 80.

Also, sensor data processing module 1 may further comprise one or more integrated circuit devices 10, which only receive sensor events from one or more other integrated circuit devices 10 arranged upstream. Specifically, integrated circuit devices 10-5 and 10-8 each comprise one or more, e.g. two, data inputs 12-3 connected to upstream integrated circuit devices 10-1 and 10-2 and 10-5 and 10-6, respectively. Such an integrated circuit device 10 is particularly advantageous for collecting and sorting sensor events based on data of sensor 90, which are arranged substantially on opposing sides of the radiation source 88. That is because gamma quanta originated from the same positron annihilation event have emission directions in an angle of substantially 180° as illustrated in Fig. 1. Thus, it is likely that two sensor events from said opposing sensors 90 are collected by the integrated circuit device 10 having substantially the same time information (i.e. having a difference within about 20 ns, preferably within about 10 ns) and shall be sorted right behind one another. This allows a more efficient and/or faster identification of related sensor events when analyzing the sensor events by a data processor 80.

Preferably, all integrated circuit devices 10 are identical with respect to their configuration and/or structure, which reduces manufacturing costs and/or design effort. Advantageously, at least some of the inputs 12 and/or outputs 14 of at least some of the plurality of identical integrated circuit devices 10 may be (particularly selectively) deactivated in order to reduce power consumption and/or increase processing speed. This may be achieved e.g. by a respective control input and/or by a corresponding hardware design of the integrated circuit devices 10.

A respective exemplary sensor data processing module comprising a plurality of integrated circuit devices 10 arranged in a cascading manner is shown in part B of Fig. 3. In this example, the plurality of integrated circuit devices 10-1 to 10-6 are identical and/or comprise the same number and/or type of inputs 12 and outputs 14. Specifically, each one of integrated circuit devices 10-1 to 10-6 comprises a plurality of, e.g. three, data inputs 12-1/2 for receiving measurement data and/or sensor events from one or more sensors 90. Also, each one of integrated circuit devices 10-1 to 10-6 comprises a plurality of, e.g. two, data inputs 12-3 for receiving one or more sensor events from one or more integrated circuit devices 10. In addition, the integrated circuit devices 10-1 to 10-6 are configured to disable one or more data inputs 12. In the example shown, data inputs 12-3 of integrated circuit devices 10-1, 10-2 and 10-3 are disabled (marked with an x). Thus, regardless of whether said data inputs 12-3 are connected to another integrated circuit device 10 or not, no sensor events are received through said disabled data inputs 12-3 of integrated circuit devices 10-1 to 10-3. Similarly, data inputs 12-1/2 of integrated circuit device 10-6 are disabled (marked with an x). Thus, regardless of whether said data inputs 12-1/2 are connected to one or more sensors 90, no measurement data and/or sensor events are received through said disabled data inputs 12-1/2 of integrated circuit device 10-6. Advantageously, only those particular data inputs 12 and/or data outputs 14 are disabled, which are not used for receiving and/or sending measurement data and/or sensor events. In the shown example, the data inputs 12, which are not connected to a sensor 90 and/or other integrated circuit device 10 are disabled. This allows use of identical integrated circuit devices 10 at different positions in the arrangement of integrated circuit devices 10, which reduces manufacturing costs and/or design effort. Also, power consumption may be reduced and/or processing efficiency may be increased.

Yet another exemplary arrangement of integrated circuit devices 10 as part of a sensor data processing module 1 is shown in part C of Fig. 3, wherein a plurality of, e.g. four, integrated circuit devices 10-1 to 10-4 are arranged and/or connected in series, i.e. one integrated circuit device 10 is connected to only one other upstream integrated circuit device 10 and may receive data from said one other integrated circuit device 10. The most upstream integrated circuit device 10-1 may comprise one or more inputs 12, which are connected to one or more sensors 90 for receiving measurement data and/or sensor events from said one or more sensors 90 only.

The integrated circuit device 10-1 is preferably configured to process the sensor events being received from a sensor 90 and/or created from measurement data by sorting the sensor events at least based on time information and further configured to send said processed sensor events to one or more subsequent integrated circuit devices 10, in the illustrated example integrated circuit device 10-2, via one or more data outputs 14.

Integrated circuit device 10-2 preferably comprises one or more data inputs 12-3 for receiving sensor events from the upstream integrated circuit device 10-1 as well as one or more data inputs 12-1/2 for receiving measurement data and/or sensor events from one or more sensors 90.

The integrated circuit device 10-2 particularly is configured to process the received sensor events and/or the sensor events created by its sensor event creation block from the measurement data by sorting the sensor events at least based on time information. The integrated circuit device 10-2 is further configured to send the processed sensor events to integrated circuit device 10-3 connected to its output 14 and arranged downstream.

Similarly, integrated circuit devices 10-3 and 10-4 each are configured to receive sensor events from an upstream integrated circuit device 10 and sensor data and/or measurement data from one or more sensors 90.

Preferably, all integrated circuit devices 10-1 to 10-4 or at least integrated circuit devices 10-2 to 10-4 are identical with respect to their configuration and/or structure, which reduces manufacturing costs and/or design effort.

The advantage of a sensor data processing module 1 as e.g. shown in Fig. 3 is that no or only limited additional hardware components are required for collecting and pre-sorting sensor data. This way, circuitry for processing a high amount of sensor data, such as from a PET scanner, may be implemented more compact, cheaper, more flexible and/or having reduced power consumption. In addition, the processor and/or computer for analyzing the entirety of sensor data requires reduced resources and/or time.

Furthermore, in case an advantageous structure is chosen for connecting the sensors 90 and integrated circuit devices 10, sensor events which seemingly have no "partner" and/or related sensor event may be deleted at an earlier stage, i.e. not only at the stage when all of the sensor events have been collected by a single processor and/or computer 80.

Also, an arrangement as or similar to part A or B of Fig. 3 has the advantage over an arrangement as or similar to part C of Fig. 3 in that the sensor events and/or measurement data are received at the different inputs of the integrated circuit devices 10 approximately simultaneously and/or with reduced delay, which in particular requires less and/or smaller data storages and/or results in increased processing speed.

Advantageously, all sensor events are ultimately collected by and/or directed to one integrated circuit device 10 before being sent to an analyzing data processor and/or computer 80. However, for reasons such as high data rate and/or hardware restrictions, it may be required and/or advantageous that a plurality of integrated circuit devices 10 each collect and sort of sensor events from upstream integrated circuit devices 10 and send said processed sensor events to an analyzing data processor and/or computer 80, which receives all sensor events and conducts analyzation for "partners" and/or related sensor events. This way, the calculation effort required by a data processor and/or a computer 80 is greatly reduced.

**Fig. 4** shows a concept for an advantageous structure for connected integrated circuit devices 10 and a plurality of sensors 90 and/or sensor segments 96 comprising a plurality of sensors 90. As indicated above, collecting all sensor events from sensors 90 and/or sensor segments 96 which are arranged at an angle of approximately 180° offers the advantage that (possibly) related sensor events are sorted next to and/or behind one another. By this, sensor events representing gamma quantum pairs may be gathered in the same data stream and sensor events with no matching partner may be safely identified and discarded at a stage before all sensor events from all sensors are collected by a data processor and/or computer 80 for example.

However, since gamma quanta may be deflected from their initial emission direction, it may be advantageous to join sensor events of sensors 90 and/or sensor segments 96, which are arranged in areas and/or positions, where two gamma quanta caused by the same positron annihilation event will probably be detected.

Depending on the size and/or orientation and/or arrangement of sensors 90 and/or sensor segments 96 as well as their distance to the radiation source and/or the size of the radiation source, a particular advantageous connection may exist, which covers the entire field of view (FOV).

As shown in the example in Fig. 4, arranging and/or connecting the sensors 90 and/or sensor segments 96 marked with 1 together with 4 to 7 and/or the integrated circuit devices receiving data from said sensors 90 and/or sensor segments 96. This way, the field of view (FOV) of said sensors 90 and/or sensor arrangements 96 is covered. A similar connection and/or arrangement would be advantageous for each of the plurality of sensors 90 and/or sensor segments 96. This way, all or at least the majority of related sensor events may be processed by integrated circuit devices 10 being serially connected and/or connected in a cascaded manner in a sensor data processing module 1, which may significantly reduce computation effort required for analyzing and sorting the plurality of sensor events by a data processor and/or computer 80. However, a respective arrangement and/or connection of sensors 90, sensor segments 96 and/or integrated circuit devices 10 may require a higher number and/or more complex connection means. Nonetheless, a respective implementation may be advantageous for specific systems, in particular including smaller PET scanners.

**Fig. 5** shows at least a part of an exemplary sensor data processing module 1 comprising a plurality of, e.g. three, integrated circuit devices 10 with a detailed and exemplary illustration of integrated circuit device 10-3. The integrated circuit devices 10-1 to 10-3 may be identical with respect to their structure and/or function. In particular one or more of integrated circuit devices 10-1 and 10-2 and/or any integrated circuit device 10 of this application may comprise one or more features and/or functions described with respect to the integrated circuit device 10-3.

Integrated circuit device 10-3 is configured to receive sensor events from one or more integrated circuit devices 10-1 and 10-2 at one or more respective data inputs 12-3. Optionally, one or more data storages 60 are provided for temporarily storing and/or buffering the received sensor events before being processed. This prevents and/or reduces loss of sensor events due to processing delays within the integrated circuit device 10-3.

Advantageously, one or more first in first out (FIFO) data storages 60 are provided so that the sensor events received by one data input are processed in accordance to their order of reception.

In Fig. 5, each sensor event is illustrated as box with a number (1...9 in the shown example) in it. The number is exemplary for the time information of the respective sensor event. As illustrated, sensor event "9" is being sent from circuit device 10-1 to integrated circuit device 10-3 and a sensor event "7" is being sent from circuit device 10-2 to integrated circuit device 10-3. Also, sensor events "8", "5", "2", "6" and "1" are queued in data storage(s) 60.

Exemplary integrated circuit device 10-3 may further comprise one or more data inputs 12 for receiving measurement data from at least one sensor 90. In this particular example, the measurement data are received via a plurality, e.g. three, data inputs 12-1. This is particularly advantageous if the sensor 90 comprises multiple sensor channels 94 so that measurement data of each sensor channel 94 is received at a respective data input 12-1.

The integrated circuit device 10-3 particularly comprises one or more sensor event creation blocks 42 for creating sensor events based on the measurement data received from said one or more sensors, preferably one sensor event creation block 42 per data input 12-1.

A sensor event creation block 42 is e.g. configured to analyze the measurement data and identify and/or detect a characteristic pattern which corresponds to a gamma quantum detected by a sensor. In particular, the sensor event creation block 42 is configured to create a sensor event for each gamma quantum, wherein each sensor event at least comprises a time information and/or an event information. The time information may particularly indicate the time of creation of a respective sensor event.

Preferably, time information allocated to sensor events created in different integrated circuit devices 10 and/or sensors 90 have the same basis so that they may be compared with one another. The event information may comprise information with respect to a measurement signal such as one or more peak values of an amplitude of a measurement signal or other information specifying the respective gamma quantum detection.

The integrated circuit device 10-3 may further comprise one or more time offset compensation blocks 44, which are configured for modifying or off-setting a time information of one or more sensor events in order to compensate for a time delay of created sensor events and/or sensor events received from one or more sensors 90.

In particular, a time offset compensation block 44 may add or subtract a time period to the time information of a sensor event. This way, any time delay and/or time offset may be adjusted so that the time information of the sensor events corresponds to the actual time of creation and/or detection and/or the time information is comparable with sensor events of other integrated circuit devices 10 of a sensor data processing module 1.

Alternatively and/or in addition, the integrated circuit device 10-3 may comprise one or more data inputs 12-2 for receiving a plurality of sensor events from one or more sensors 90. However, in case the sensor events received through said one or more data inputs 12-2 do not comprise time information and/or time information not comparable with time information of sensor events created by other integrated circuit devices 10, the integrated circuit device 10-3 may be configured to add and/or allocate and/or modify a time information of said sensor events.

Preferably, one or more data storages 60 are provided for temporarily storing one or more created sensor events. As illustrated, sensor events "3" and "4" are stored in data storages 60 provided between sensor event creation block 42 and sensor event processing block 50.

Integrated circuit device 10-3 may comprise one or more sensor event processing blocks 50 for processing the sensor events by sorting the sensor events. As exemplarily illustrated, integrated circuit device 10-3 comprises at least one sensor event processing module 50, which is configured to process a plurality of sensor events. The sensor event processing module 50 is configured to receive and/or access one or more sensor events, which are preferably queued in one or more data storages 60.

The sensor event processing module 50 particularly processes the sensor events by sorting them according to their time information by forwarding the sensor event having the lowest time information.

As illustrated in Fig. 5, the sensor event processing module 50 located in the upper right corner has sensor events "1", "2" and "3" queuing for being processed. Thus, sensor event "1" is being forwarded since its time information is the lowest of the three queuing sensor events. Preferably, the forwarded sensor event, i.e. sensor event "1" in the illustrated example, is being deleted and/or removed from the respective data storage 60.

Preferably, the processed sensor events are sent to another integrated circuit device 10 and/or a data processor and/or computer 80 connected to one or more data outputs 14 of the integrated circuit device 10-3.

Optionally, the integrated circuit device 10-3 may comprise one or more further sensor event processing modules 50, e.g. connected to the data storages 60 for buffering and/or queuing sensor events created from the measurement data of the sensor(s) 60. Said sensor event processing module 50 processes the sensor events located at the front of the queues and sorts them according to their time information by forwarding the sensor event having the lowest time information. As can be seen, sensor events "3" and "4" are compared, which results in sensor event "3" to be forwarded as its time information is lower.

Preferably, sensor event "3" is deleted from the data storage 60 on the left side of sensor event processing module 50 (not illustrated). Preferably, a further data storage 60 is provided for temporarily storing the forwarded sensor events.

Optionally, one or more further sensor event processing blocks 50 may be provided at one or more other locations within the integrated circuit device 10-3, in particular for sorting the sensor events received from upstream integrated circuit devices 10-1 and 10-2 before being mixed and/or processed with sensor events from the sensor(s).

Preferably, at least one, preferably all, of the plurality of integrated circuit devices 10 of a sensor data processing module 1 are configured to encode and/or decode sensor events send from their outputs 14 and/or received at their inputs 12-2/3, respectively. Particularly suitable is 8b/10b, 16b/18b or 64b/66b encoding. An encoding of the sensor events e.g. allows that an AC coupling is possible since voltage differences between different parts of the sensor data processing module may be compensated for.

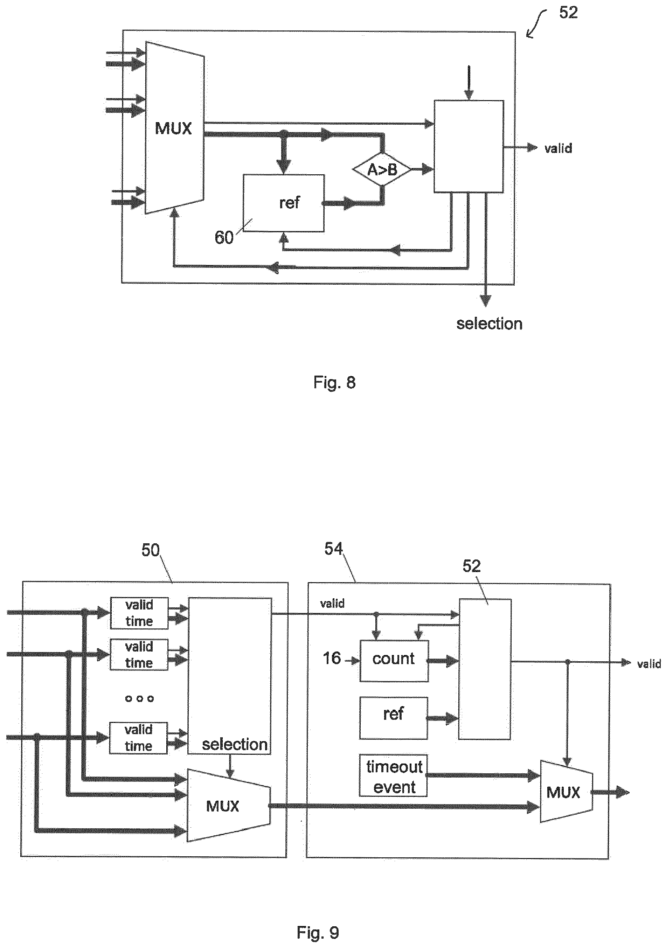

One or more of sensor event processing blocks 50 may comprise and/or be connected to a timeout event creation block 54. Said timeout event creation block 54 is configured to create a timeout event if no sensor event has been received by the integrated circuit device 10 and/or created and/or queuing for a specified (predetermined or predeterminable) period of time in order to avoid and/or solve a data jam and/or delay of processing. With respect to exemplary functions of a timeout event creation block 54, it is referred to Fig. 9 and the corresponding description further below. One or more integrated circuit devices 10 may include one or more clock inputs 16 for receiving a clock and/or timing signal. It is preferable if all integrated circuit devices 10 of a sensor data processing module 1 receive the same clock signal or clock signals having the same time base (e.g. originated from the same clock source) so that all integrated circuit devices 10 may work in a synchronized manner. Preferably, one or more integrated circuit devices 10 comprise a first clock input 16 for receiving a continuously oscillating clock signal and a second clock input 16 for receiving a timer signal, wherein e.g. the timer signal triggers a start and/or a reset of a particular function and/or process.

One or more integrated circuit devices 10 may also comprise one or more control inputs 18 for receiving a control signal. A respective control signal may e.g. be used for modifying a setting of one or more integrated circuit devices 10. Also, the control signal may include a clock and/or timing signal and/or information from which a respective signal may be extracted and/or generated. Alternatively and/or in addition, a control signal 18 may be or comprise a reset signal for synchronization of at least some of the plurality of integrated circuit devices 10.

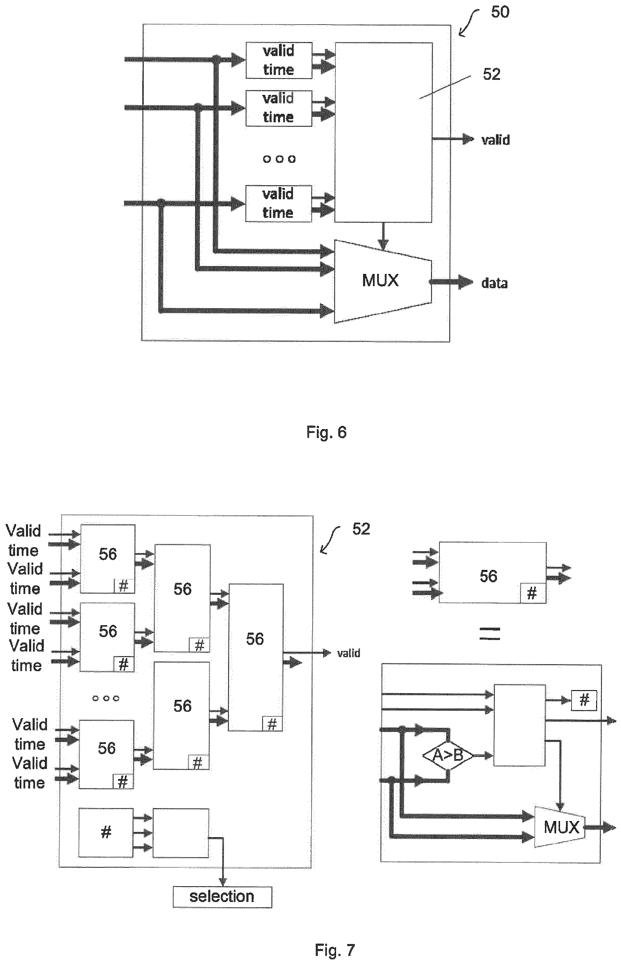

**Fig. 6** shows an exemplary sensor event processing block 50 for processing one or more sensor events by sorting the sensor events at least based on their time information.

As illustrated in Fig. 6, a plurality of sensor events may include time information and, optionally, a "valid" status flag value indicating that a sensor event is present at an input of a functional block 52. One or more, e.g. three, sensor events may be present and/or available for access by the functional block 52.

The functional block 52 of the sensor event processing block 50 shown in Fig. 6 is configured to compare the time information of each sensor event and outputs a selection to a data selector (MUX), such as a multiplexer, which forwards the sensor event corresponding to the selection of the functional block 52, e.g. the sensor event having the lowest time information.

**Fig. 7** shows an exemplary configuration of a functional block 52 for processing sensor events by selecting one particular sensor event, e.g. based on time information, in particular by searching for the oldest sensor event and/or the sensor event having the lowest time information. The functional block 52 may include a plurality of inputs for receiving and/or accessing a plurality of sensor events.

The functional block 52 particularly may further include a plurality of logic blocks 56, each configured to process two sensor events, e.g. by observing their 'valid' status flags and by comparing their time information and deciding which sensor event comprises the lower time information.

Each logic block 56 particularly forwards its decision and/or the sensor event corresponding to the decision. If required, i.e. if more than two sensor events are processed, the respective decisions are again compared by another logic block 56 and so on until the sensor event having the lowest time information is identified and/or forwarded.

Thereby, each functional block 52 provides information '#' indicating which one of the plurality of inputs includes the sensor event having the lowest time information. Said information is used by a data selector (e.g. multiplexer - MUX) to determine which sensor event is read out and/or forwarded and/or output from functional block 50.

**Fig. 8** shows another exemplary functional block 52 for processing sensor events by selecting particular sensor events, e.g. based on time information, using a serial structure. As illustrated in Fig. 8, a data selector (e.g. multiplexer - MUX) may be provided and configured to access and/or receive a plurality of sensor events.

The data processor particularly forwards one sensor event after another to a further functional block, which compares the time information of the sensor events. Specifically, the time information of the first sensor event is stored as reference time information in a data storage 60 and used for being compared with the time information of a second sensor event. If the time information of the second sensor event is lower than the reference time information, said time information is stored as reference time information. If it is higher, the reference time information is not replaced. This is repeated with each sensor event so that the sensor event with the lowest time information is identified.

The described and illustrated senor event processing blocks 50 and/or functional blocks 52 and/or logic block 56 are merely examples for processing the plurality of sensor events. Alternative devices and/or blocks may be provided for processing the sensor events in accordance to needs, in particular for sorting the plurality of sensor events, e.g. at least based on their time information. Also, devices and/or blocks may be provided for identifying sensor events having no partner and deleting and/or discarding said sensor events. As an example, one or more integrated circuit devices 10 of a sensor data processing module 1 may comprise one or more functional blocks for discarding and/or deleting lone sensor events, i.e. sensor events with no apparent partner. Advantageously, an integrated circuit device 10, which receives and/or processes all of the sensor events may compare the time information of each sensor event prior to sending the sorted sensor events. In particular, if the time information of a particular sensor event differs from the time information of the sensor events sorted before and after said particular sensor event by more than a specified time period, e.g. about 10 ns, said particular sensor event may be characterized and/or identified as sensor event having no detected partner and may be discarded and/or deleted. This way, the computation effort of a processor and/or computer 80 for a final analysis of paired sensor events is reduced since only sensor events having a partner are to be processed further. A respective functional block may only be present and/or enabled in integrated circuit devices 10 which processes substantially all sensor events representing potential pairs of gamma quanta, for example, the last and/or most downstream integrated circuit device of the sensor data processing modules 1 shown in Fig. 3. Other integrated circuit devices 10 may either not comprise a respective functional block 52 and/or have it disabled so that no sensor events are deleted and/or discarded prematurely, i.e. before the respective sensor event has been processed together with all potential partner sensor events.

**Fig. 9** shows an exemplary timeout event creation block 54, which may be comprised by one or more integrated circuit devices 10 and/or which is coupled to a sensor data processing block 50.

The timeout event creation block 54 is particularly configured to create and/or send a timeout event in case a predefined reference time period has been passed in which no sensor events have been created and/or received and/or processed by an integrated circuit device 10 and/or one or more blocks of an integrated circuit device 10. Said timeout event may be processed substantially identically as a sensor event. In particular, it may indicate that no sensor events are queuing at a respective input and/or data storage so that a subsequent functional block may not wait for a (further) sensor event to arrive in order to continue processing sensor events.

As illustrated in Fig. 9, the timeout event creation block 54 may comprise a counter "count" for counting a time interval from the time the last sensor event has been processed by the sensor event processing block 50. For example, it may be connected to a clock signal.

If a sensor event is processed by the sensor event processing block 50, the counter is reset. If the counter is equal and/or higher than a reference time period, a timeout event is being sent. This may be controlled and/or performed by a functional block 52 being configured accordingly.

A timeout event may either be predefined or created individually. Preferably, the timeout event has the same size and/or length and/or comprises the same structure as a sensor event so that it may be processed in the same way as a sensor event. Preferably, each timeout event includes time information indicating time of creation and/or sending of the timeout event. This way, a logic block 56 and/or functional block 52 and/or an integrated circuit device 10 may process sensor events and one or more timeout events based on their respective time information.

The timeout event is preferably processed the same way as a sensor event, in particular by being sent and/or received using the same output 14 and/or input 12 of an integrated circuit device 10 as for a sensor event. Also, a timeout event may be removed and/or deleted at and/or by a subsequent logic block 56 and/or functional block 52 and/or integrated circuit device 10.

Optionally, a timeout event may include status information and/or other information, e.g. regarding the sensor data processing module 50 and/or one or more sensors 90 and/or one or more integrated circuit devices 10. In this case, it is preferred that the timeout events are processed and forwarded/sent, e.g. to a data processor storing and/or analyzing the information in the timeout events. Such information particularly may include one or more of: temperature of an integrated circuit device 10, a sensor event count, time information, measurement information quantity and/or quality, integrated circuit device ID, sensor ID, sensor channel ID and/or other information.

The reference time period may preferably be set and/or changed, e.g. by a control signal, in order to set and/or adjust a rate the timeout event is created. It may be identical or different for a plurality of integrated circuit devices 10 of a sensor data processing module 1 and/or timeout event creation blocks 54 of the same integrated circuit device 10.

A timeout event creation block 54 as described above may be included and/or connected to one or more sensor event creation blocks 42 and/or a sensor event processing blocks 50.

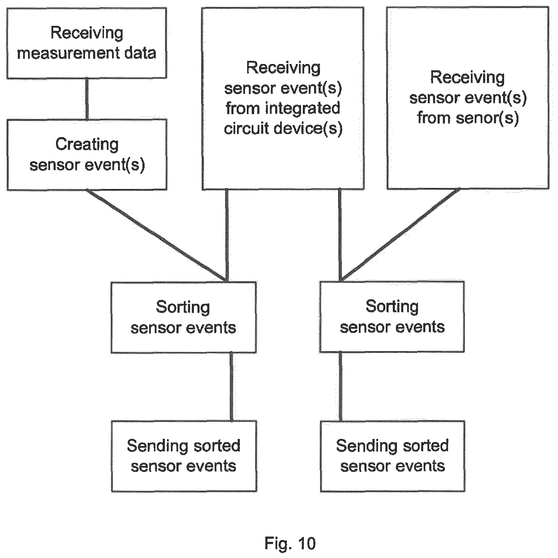

**Fig. 10** shows a flow diagram of methods for receiving and processing sensor data to be carried out by an integrated circuit device 10 being part of a plurality of integrated circuit devices 10 being arranged in series and/or in a cascading manner.

One method, to be carried out by an integrated circuit device 10 connected to at least one sensor 90 and at least one other integrated circuit device 10, particularly includes the following steps:
Receiving measurement data from one or more sensors 90, in particular optical sensors of a PET scanner 100. The measurement data may for example comprise and/or be a voltage signal and/or one voltage values output from one or more sensors 90.
Receiving one or more sensor events from one or more upstream integrated circuit devices, each sensor event comprises at least a time information and an event information.
Creating one or more sensor events from the measurement data, each sensor event comprises at least a time information and an event information. This may particularly include analyzing the measurement data, identifying one or more detected gamma quanta and creating a sensor events for each detected gamma quantum.
Processing the sensor events by sorting the sensor events at least based on the time information. This may particularly include comparing time information of two or more sensor events and sorting and/or forwarding the sensor events at least based on their time information, preferably in an ascending order of the time information.
Sending the processed sensor events, i.e. the sensor events sorted at least based on their time information, to one or more other integrated circuit devices 10 or a data processor 80.

Another method, to be carried out by an integrated circuit device 10 connected to at least one sensor 90 and at least one other integrated circuit device 10, particularly includes the following steps:
Receiving one or more sensor events from one or more sensors, in particular optical sensors of a PET scanner, and receiving one or more sensor events from one or more upstream integrated circuit devices, each sensor event comprises at least a time information and an event information.
Processing the sensor events by sorting the sensor events at least based on the time information. This may particularly include comparing time information of two or more sensor events and sorting and/or forwarding the sensor events at least based on their time information, preferably in an ascending order of the time information.
Sending the processed sensor events, i.e. the sensor events sorted at least based on their time information, to one or more other integrated circuit devices 10 or a data processor 80.

Presented method(s) may include aspects and/or features as described with respect to other embodiments herein, in particular with respect to Fig. 5 regarding creating sensor events and/or processing sensor events. Also, sorting the sensor events may include aspects and/or features as described with respect to Figs. 6 to 8. The method(s) may further include decoding sensor events received by one or more integrated circuit devices and/or encoding sensor events before sending the sensor events. The method(s) may also further include creating one or more timeout events if no sensor event has been received and/or created within a specified (predetermined and/or predeterminable) time period and sending the timeout event, in particular as described with respect to Fig. 9.

### List of Reference Numerals

- 1: sensor data processing module
- 10: integrated circuit device
- 12: data input
- 14: data output
- 16: clock input
- 18: control input
- 40: sensor event
- 42: sensor event creation block
- 44: timing offset compensation block
- 50: sensor event processing block
- 52: functional block
- 54: timeout event creation block
- 56: logic block
- 60: data storage
- 80: data processor
- 88: radiation source
- 90: sensor
- 92: scintillator
- 94: sensor channel
- 96: sensor segment of a PET scanner
- 98: emission direction of a gamma quantum
- 100: positron emission tomography (PET) scanner

## Claims

1. Sensor data processing module (1) including a plurality of integrated circuit devices (10) each configured to receive and process sensor data, in particular sensor data from a PET scanner (100), the integrated circuit devices (10) each comprising:
at least one data input (12) for receiving measurement data from at least one sensor (90);
at least one data input (12) for receiving a plurality of sensor events from at least one other integrated circuit device (10), wherein each sensor event comprises at least a time information and an event information; and
at least one data output (14) for sending one or more sensor events;
wherein the integrated circuit devices (10) are each configured:
to create one or more sensor events from the measurement data, wherein each sensor event comprises at least a time information and an event information; and
to process the sensor events by sorting the sensor events at least based on the time information; and
wherein at least two of the plurality of integrated circuit devices (10) are connected such that the data output (14) of one integrated circuit device (10) is connected to the data input (12) of at least one other integrated circuit device (10).

2. Sensor data processing module (1) including a plurality of integrated circuit devices (10) each configured to receive and process sensor data, in particular sensor data from a PET scanner (100), the integrated circuit devices (10) each comprising:
a plurality of data inputs (12) for receiving a plurality of sensor events from at least one sensor (90) and/or from at least one other integrated circuit device (10), wherein each sensor event comprises at least a time information and an event information; and
at least one data output (14) for sending one or more sensor events;
wherein the integrated circuit devices (10) are each configured to process the plurality of sensor events by sorting the sensor events at least based on the time information; and
wherein at least two of the plurality of integrated circuit devices (10) are connected such that the data output (14) of one integrated circuit device (10) is connected to the data input (12) of at least one other integrated circuit device (10).

3. Sensor data processing module (1) of claim 1 or 2, wherein the plurality of integrated circuit devices (10) are identical.

4. Sensor data processing module (1) of any one of the preceding claims, wherein the plurality of integrated circuit devices (10) are connected in a serial and/or cascading manner.

5. Sensor data processing module (1) of any one of the preceding claims, wherein each sensor event further comprises:
at least one status flag; and/or
a sensor ID; and/or
a sensor channel ID; and/or
an integrated circuit device ID.

6. Sensor data processing module (1) of any one of the preceding claims, wherein each integrated circuit device (10) further comprises one or more data storages (60) for temporarily storing one or more sensor events.

7. Sensor data processing module (1) of any one of the preceding claims, wherein each integrated circuit device (10) further comprises at least one clock input (16) for receiving a clock and/or timer signal.

8. Sensor data processing module (1) of any one of the preceding claims, wherein each integrated circuit device (10) further comprises a control input (18) for receiving a control signal.

9. Sensor data processing module (1) of any one of the preceding claims, wherein each integrated circuit device (10) is configured to disable one or more data inputs (12).

10. Sensor data processing module (1) of any one of the preceding claims, wherein at least one integrated circuit device (10) of the plurality of integrated circuit devices (10) is configured to create a timeout event if no sensor event has been received and/or processed within a specified time period and send the timeout event.

11. Sensor data processing module (1) of any one of the preceding claims, wherein each integrated circuit device (10) is configured to encode the processed sensor events and/or decode sensor events received from another integrated circuit device (10) or a sensor (90).

12. Sensor data processing module (1) of any one of the preceding claims, further comprising a data processor (80) for receiving and processing sensor events from all integrated circuit devices (10) of the sensor data processing module (1).

13. PET-scanner system comprising:
a plurality of sensors (90), in particular optical sensors for detecting gamma quanta; and
a sensor data processing module (1) as defined in any one of claims 1-12.

14. Method for receiving and processing sensor data, in particular sensor data of a PET scanner (100), to be carried out by an integrated circuit device (10) being part of a plurality of integrated circuit devices (10) being arranged in series and/or in a cascaded manner, the method comprising:
receiving measurement data from one or more sensors (90), in particular optical sensors (90) of a PET scanner (100);
receiving one or more sensor events from one or more upstream integrated circuit devices (10), each sensor event comprises at least a time information and an event information;
creating one or more sensor events from the measurement data, each sensor event comprises at least a time information and an event information;
processing the sensor events by sorting the sensor events at least based on the time information; and
sending the processed sensor events.

15. Method for receiving and processing sensor data, in particular sensor data of a PET scanner (100), to be carried out by an integrated circuit device (10) being part of a plurality of integrated circuit devices (10) being arranged in series and/or in a cascaded manner, the method comprising:
receiving sensor events from one or more sensors (90), in particular optical sensors (90) of a PET scanner (100), and from one or more upstream integrated circuit devices, each sensor event comprises at least a time information and an event information;
processing the sensor events by sorting the sensor events at least based on the time information; and
sending the processed sensor events.

16. Method of claim 14 or 15, further comprising creating a timeout event if no sensor event has been received and/or created within a specified time period and sending the timeout event.

17. Method of claim any one of claims 14 to 16, further comprising encoding the processed sensor events and/or decoding sensor events received from another integrated circuit device (10) or a sensor (90).
